# EUROPÄISCHE PATENTANMELDUNG

(11) **EP 0 729 247 A2**
(43) Veröffentlichungstag der Anmeldung: **28.08.1996**
(21) Anmeldenummer: 96102335.5
(22) Anmeldetag: 16.02.1996
(51) Int. Cl.: H04J 14/02, H04J 3/14

(54) **Verfahren und Anordnung zur optimalen Nutzung der Übertragungskapazität in synchronen bidirektionalen Ringnetzen**

(30) Priorität: 22.02.1995 DE 19506216
(71) Anmelder: Deutsche Telekom AG, D-53113 Bonn (DE)
(72) Erfinder: Hofmann, Hilmar, D-63667 Nidda 13 (DE); Wenz, Heinrich, D-13349 Berlin (DE)

(57) **Zusammenfassung**

**1.1.** Verfahren und Anordnung zur optimalen Nutzung der Übertragungskapazität in synchronen bidirektionalen Ringnetzen

**2.1.** Die erfindungsgemäße Lösung wird in bidirektionalen synchronen Ringnetzen verwendet. Sie soll den Schutz und die optimalen Ausnutzung der Übertragungskapazität gewährleisten.

**2.2.** Erfindungsgemäß werden jedem Glasfaser-Wellenleiter des Ringnetzes für die Übertragung von Betriebssignalen zwei unterschiedliche Wellenlängen zugeordnet. Im störungsfreien Zustand erfolgt über die erste Wellenlänge der Austausch sämtlicher Betriebssignale zwischen den Netzelementen (NE). Zeitgleich wird über die zweite Wellenlänge ein in allen Netzelementen (NE) durchgeschaltetes Ersatzsignal zur Verfügung gestellt. Im Störungsfall werden die Betriebssignale zwischen den in ihrer Verbindung unterbrochenen Netzelementen (NE) auf den aus der Störung und der Struktur des Ringnetzes resultierenden Ersatzschaltweg umgeschaltet und über das auf der zweiten Wellenlänge permanent zur Verfügung stehende Ersatzsignal übertragen.

**2.3.** Die erfindungsgemäße Lösung ermöglicht sowohl im störungsfreien Zustand, als auch im Störungsfall, die maximal mögliche Auslastung der Übertragungskapazität im Ringnetz.

## Beschreibung

Die erfindungsgemäße Lösung wird in bidirektionalen synchronen Ringnetzen zum Schutz der Übertragungskapazität verwendet. Sie dient dabei insbesondere der optimalen Nutzung, dh. der vollen Ausschöpfung der Übertragungskapazität, sowohl im normalen Betrieb, als auch im Fall der Störung der Verbindung zwischen den Netzelementen NE.

Gemäß Stand der Technik werden zur optimierten Nutzung der Übertragungskapazität zwischen den einzelnen Netzelementen NE synchrone Ringnetze in bidirektionaler Betriebsweise betrieben. In den internationalen Gremien ETSI (European Telecommunication Standards Institute) und ITU-T (International Telecommunication Union) werden zur Zeit verschiedene Ersatzschalteszenarien diskutiert, die entweder zusätzliche Glasfaserverbindungen zwischen den Netzelementen NE erfordern (Section Protection-Mechanismen in einem Vier-Faser-Ring), oder die vorhandene Übertragungskapazitäten im Ring selbst belegen (Path Protection oder Subnetwork Connection Protection). Im ersten Fall müssen zusätzliche Glasfaser-Wellenleiter geschaltet werden, die nur dazu dienen, im Störungsfall die volle Übertragungskapazität aufrecht zu erhalten. Im zweiten Fall kann auch im störungsfreien Zustand nicht die maximal mögliche Übertragungskapazität ausgenutzt werden.

Ziel der Erfindung ist die Entwicklung einer Lösung, mit der man sowohl im störungsfreien Zustand, als auch im Störungsfall, die maximal mögliche Übertragungskapazität im Ringnetz zwischen allen Netzelementen NE nutzen kann. Die erfindungsgemäße Lösung soll weder zusätzliche Glasfaser-Wellenleiter erfordern, noch im störungsfreien Zustand Übertragungskapazität des Betriebssignals zwischen den Netzelementen NE binden.

Die erfindungsgemäße Lösung basiert auf der Schaffung von zusätzlicher Ersatzkapazität durch die Übertragung von zwei optischen Signalen unterschiedlicher Wellenlänge auf jedem Glasfaser-Wellenleiter des bidirektionalen Ringnetzes. Im nicht gestörten Zustand des Ringnetzes dient das erste optische Signal als Betriebssignal für die Übertragung der optischen Signale zwischen den Netzelementen NE und zwar unter Auslastung der vollen Übertragungskapazität. Das zweite optische Signal ist als Ersatzsignal für den Störungsfall vorgesehen. Im störungsfreien Zustand des Ringnetzes wird das Ersatzsignal als ein in allen Netzelementen NE durchgeschaltetes Ersatzsignal bereitgestellt, über welches zu diesem Zeitpunkt kein Betriebssignalaustausch stattfindet. Im Störungsfall, d. h. bei Unterbrechung der Verbindung zwischen zwei Netzelementen NE, wird das Betriebssignal zwischen den vom Ausfall der Verbindung betroffenen Netzelementen NE des Ringnetzes unter Wahrung der vollen Übertragungskapazität auf das Ersatzsignal und damit auf die zweite Wellenlänge umgeschaltet. Der Datenaustausch zwischen den von der Unterbrechung betroffenen Netzelementen NE des Ringnetzes findet nunmehr über den sich aus der Struktur des Ringnetzes ergebenden Ersatzschaltweg, der in den nicht von der Störung betroffenen Netzelementen NE durchgeschaltet ist, statt.
Das erfindungsgemäße Verfahren wird dadurch ermöglicht, daß in den Netzelementen NE, beispielsweise in den als Netzelement NE verwendeten ADD/DROP-Multiplexer ADM, parallel zu den vorhandenen optischen Schnittstellen, jeweils zusätzliche optische Schnittstellen angeordnet sind. Diese zusätzlichen optischen Schnittstellen arbeiten im Gegensatz zu den vorhandenen in einem anderen Wellenlängenbereich (z. B. vorhandene Schnittstellen: 1310 nm, zusätzliche Schnittstellen: 1550 nm). Zur Realisierung der erfindungsgemäßen Lösung sind eine modifizierte, in den vorhandenen Standards (ITU-T G.783) in dieser Form nicht beschriebene Multiplex-Section-Protection-Funktion (MSP) und optische Multiplexer/Demultiplexer erforderlich. Betriebssignal und Ersatzsignal des optischen Senders werden am Ausgang jedes Netzelementes NE in geeigneter Weise über optische Multiplexer zusammengefaßt und über den jeweiligen Glasfaser-Wellenleiter zum Empfangsort übertragen. Dort trennt ein optischer Demultiplexer die beiden optischen Signale unterschiedlicher Wellenlänge und führt sie den weiteren Verarbeitungsstufen zu.

Die erfindungsgemäße Lösung wird anhand eines Ausführungsbeispiels näher erläutert:

Figur 1 zeigt ein bidirektionales Zweifaser-Ringnetz, das für vier Netzelemente NE konzipiert ist.

Figur 2 zeigt die Führung der Betriebssignale über den Ersatzweg im Falle eines Fehlers (Unterbrechung) zwischen den Netzelementen NE A und NE D.

Figur 3 und 4 zeigen im Detail, wie die oben beschriebene Betriebsweise durch die zusätzlichen Funktionen in den einzelnen Netzelementen NE realisiert wird:

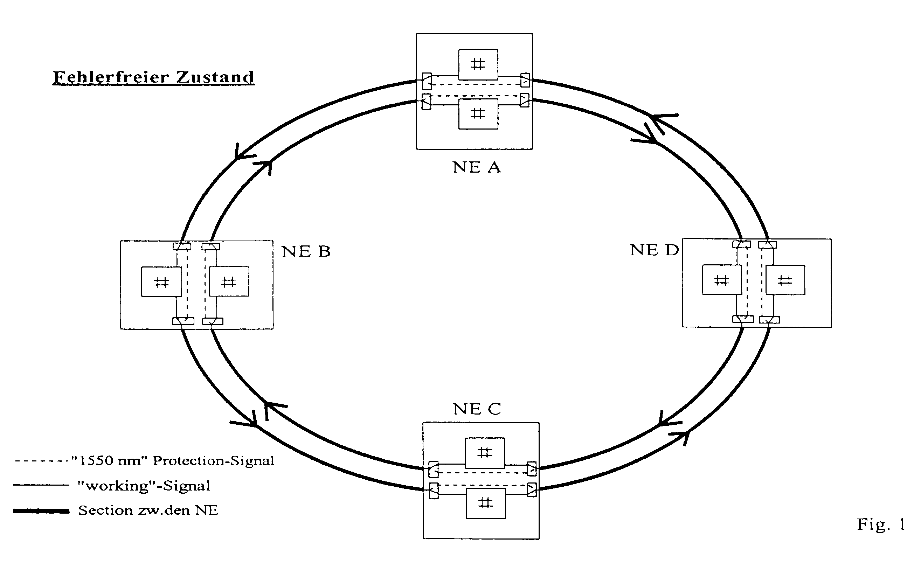

Die Netzelemente NE sind mittels Glasfasern zu einem bidirektionalen Zweifaser-Ringnetz, wie in Fig.1 dargestellt, miteinander verbunden. Auf jedem Glasfaser-Wellenleiter werden je 2 optische Signale unterschiedlicher Wellenlänge übertragen. Im dargestellten Ausführungsbeispiel wurde ein 1310-nm-Signal als Betriebssignal und ein 1550-nm-Signal als Ersatzsignal gewählt. Das Betriebssignal wird in den Netzelementen NE den intern realisierten Verarbeitungsstufen nach ITU-T G.783 zugeführt. Das Ersatzsignal ist in allen Netzelementen NE im fehlerfreien Zustand durchgeschaltet, wird aber während des fehlerfreien Zustandes nicht zum Betriebsdatenaustausch verwendet.

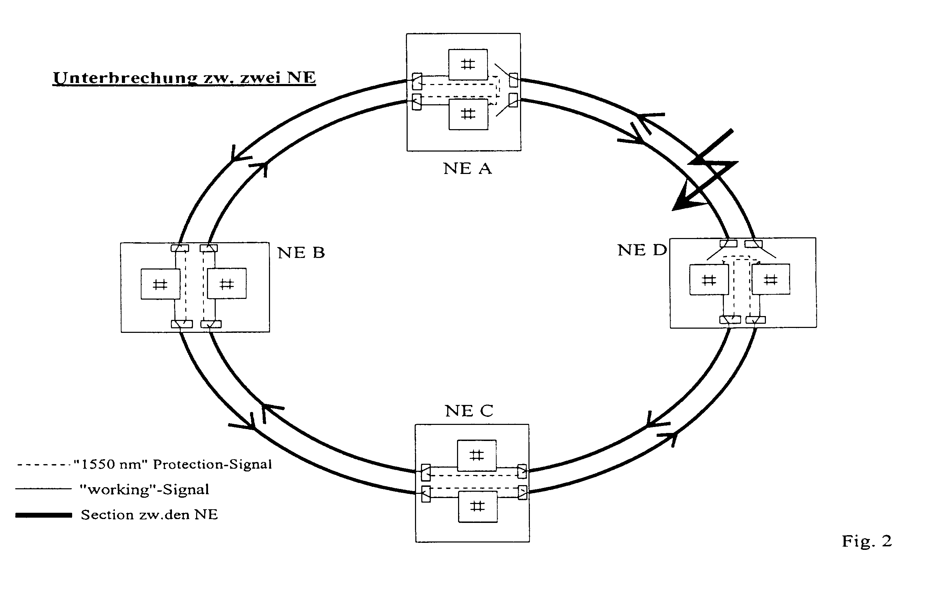

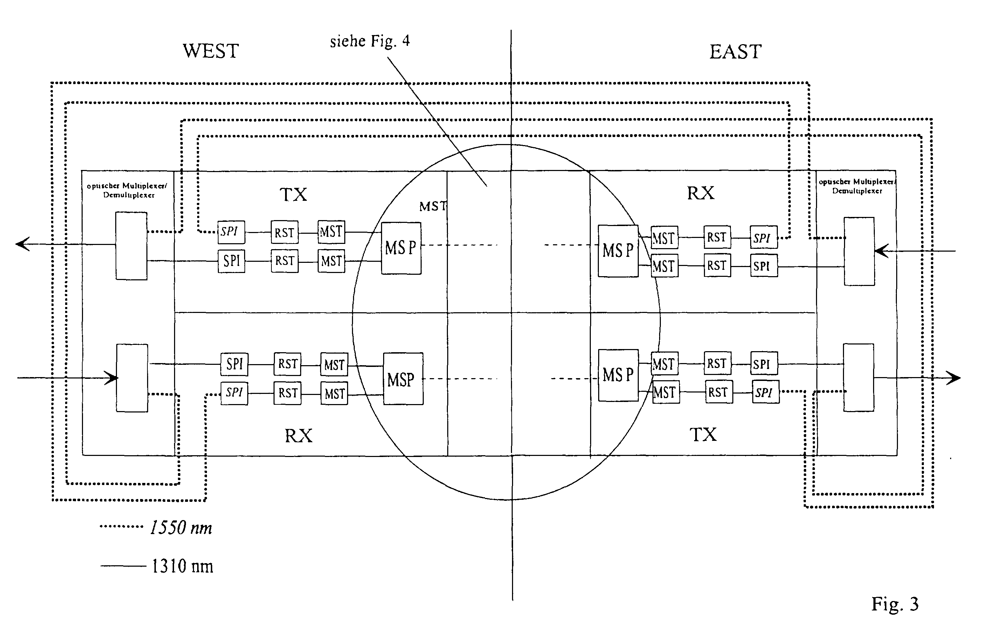

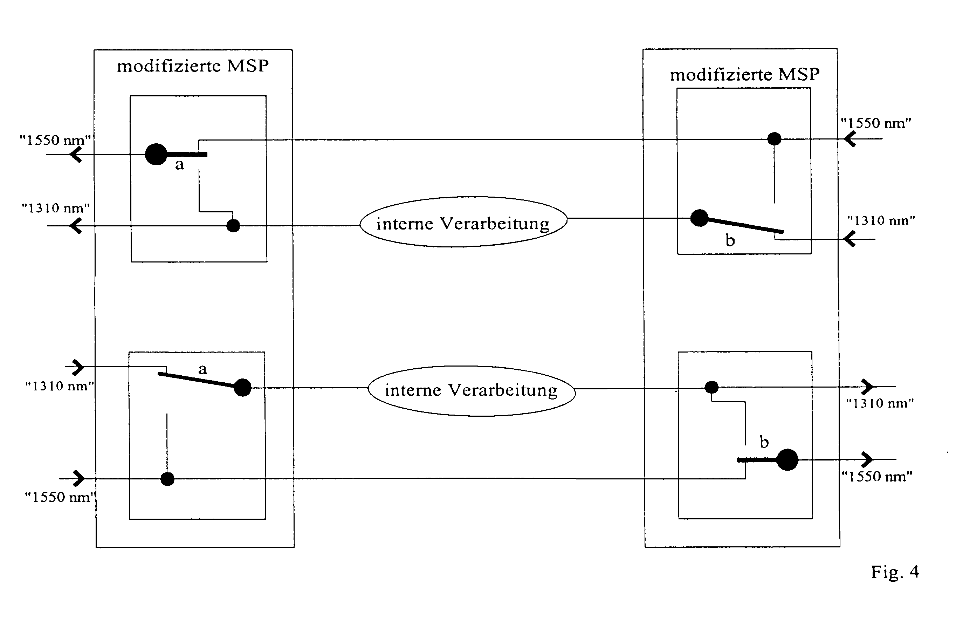

Zur technischen Realisierung des erfindungsgemäßen Verfahrens sind jedem Netzelement NE für jede Übertragungsrichtung im Ring (East und West) die doppelte Anzahl von optischen Schnittstellen zugeordnet. Das bedeutet, das jedem Glasfaser-Wellenleiter für jede Richtung sowohl eine 1310-nm- als auch eine 1550-nm-Schnittstelle zugeordnet ist.
Die an den Aus- bzw. Eingängen der optischen Schnittstellen angeordneten optischen Multiplexer/Demultiplexer stellen sicher, daß im Fehlerfall die unterbrochene Multiplex-Sektion über die nicht vom Fehler betroffene Ringrichtung ersatzgeschaltet werden kann. Dabei wird die Gewährleistung der gesamten Übertragungskapazität beim Datenaustausch nicht beeinträchtigt.
Eine modifizierte MSP-Funktion (Multiplex Section Protection) nach Fig. 4 schaltet im Fehlerfall das Betriebssignal auf das Ersatzsignal (1550-nm) um. Der Datenaustausch zwischen den beiden gestörten Netzelementen NE findet nunmehr über den Ersatzweg (andere Ringrichtung, andere Wellenlänge) statt. Dabei ist der Ersatzweg im Netzelement NE B und im Netzelement NE C durchgeschaltet. Dieser Fall ist in Fig. 2 dargestellt. Die Störung betrifft die Verbindung zwischen den Netzelementen NE A und NE D. Der Datenaustausch zwischen den Netzelementen NE A und NE D findet nunmehr auf dem Ersatzweg über die Netzelemente NE B und NE C statt. Auf Grund der Belegung jedes Glasfaser-Wellenleiters mit zwei Signalen unterschiedlicher Wellenlänge kann der gesamte Datenaustausch zwischen allen Netzelementen NE A - D auch im Störungsfall aufrecht erhalten werden. Der normale Datenaustausch über das Betriebssignal wird nicht beeinträchtigt, da das Betriebssignal und das Ersatzsignal zwar zeitgleich über die selben Glasfaser-Wellenleiter, jedoch mit unterschiedlichen Wellenlängen übertragen werden. Betriebssignal und Ersatzsignal können sich demgemäß auch nicht beeinflussen.
In Fig. 3 ist ein erfindungsgemäß geändertes Netzelement NE dargestellt. Jeder ankommende Glasfaser-Wellenleiter ist mit einem optischen Demultiplexer, jeder abgehende Glasfaser-Wellenleiter mit einem optischen Multiplexer verbunden. Der optische Demultiplexer trennt das ankommende optische Signal in Betriebssignal und Ersatzsignal auf. Der optische Multiplexer faßt das abgehende Betriebssignal und das Ersatzsignal zusammen. Das Ersatzsignal ist über die gleichen Funktionsgruppen SPI; RST und MST, wie sie bekannterweise für das Betriebssignal verwendet werden, mit einer modifizierten MSP-Funktion verbunden. Auf der modifizierten MSP-Funktion läuft auch das Betriebssignal auf. Eine Realisierung der Netzelemente NE gemäß Fig 3 stellt sicher, daß beide Signale (Betriebs- und Ersatzsignal) zu jeder Zeit überwacht werden und somit eine Aussage über die Übertragungsqualität für beide Signale möglich ist. Die Umschaltefunktion für den Störungsfall und damit die Durchschaltung des Ersatzweges für den Datenaustausch zwischen den von der Störung betroffenen Netzelementen NE wird durch die geänderte MSP-Funktion bewirkt.
Umschaltekriterium für die modifizierte MSP-Funktion ist der Ausfall des optischen Empfangssignals (LOS-Detektion in der Funktion SPI). Darüber hinaus können als zusätzliche Kriterien noch die in den Funktionseinheiten RST und MST erkannten Fehler LOF (Loss Of France), MS-AIS (Multiplex Section-Alarm Indication Signal) und EBER (Excessive Bit Error Rate) verwendet werden. Die MSP Funktion wurde erfindungsgemäß mit einer zusätzlichen Umschaltefunktion ausgestattet.

Durch die permanente Überwachung des optischen Empfangssignales ist auch die Rückschaltung auf das Betriebssignal nach Beseitigung eines Fehlers gewährleistet. Sobald die SPI-Funktion (Betriebssignal) wieder ein gültiges Betriebssignal empfängt, wird nach Ablauf einer Schutzzeit X die Ersatzschaltung wieder aufgehoben. Eine Schutzzeit X ist notwendig, um bei Fehlern, die im Millisekunden- bis Sekundenbereich immer wieder auftreten und verschwinden, ein Hin- und Herschalten zwischen Betriebs- und Ersatzweg zu verhindern.

Der Hauptvorteil der erfindungsgemäßen Lösung gegenüber einer Ersatzschaltung über Path-Protection- oder Subnetwork-Connection-Protection-Mechanismen besteht darin, daß die komplette Übertragungskapazität zwischen den Netzelementen NE mit Verkehr belegt werden kann, ohne daß zusätzliche Glasfaser-Wellenleiter geschaltet werden müssen. Somit wird eine kostengünstige Möglichkeit geschaffen, die Verfügbarkeit der in bidirektionalen Ringnetzen geführten Übertragungswege zu erhöhen. Ein weiterer Vorteil ist die hardwaremäßige Realisierung in den Netzelementen NE, die im Gegensatz zu netzmanagementabhängigen Ersatzschaltungen, ein sehr schnelles Ersatzschalten im Fehlerfall gewährleistet. Das beruht darauf, daß eine zeitaufwendige Umkonfiguration nicht mehr notwendig ist. Die Umroutung des gestörten Datenverkehrs auf eine zweite Ersatzwellenlänge erfolgt kurzfristig durch die Umschaltung auf den bereits im nicht gestörten Zustand durchgeschalteten Ersatzweg.

### Aufstellung der verwendeten Bezugszeichen

- EBER: Excessive Bit Error Rate
- ETSI: European Telekommunication Standards Institute
- ITU: International Telecommunication Union
- LOF: Loss Of France
- LOS: Loss Of Signal
- MS-Ais: Multiplex Section-Alarm Indication Signal
- MSP: Multiplex Section Protection
- MST: Multiplex Section Termination
- NE A;B;C;D: Network Element /Netzelement
- RST: Regenerator Section Termination
- SPI: Synchronous Physical Interface
- TX: Senderichtung
- RX: Empfangsrichtung

## Patentansprüche

1. Verfahren zur optimalen Nutzung der Übertragungskapazität in synchronen bidirektionalen Ringnetzen wobei die Netzelemente (NE) mittels Glasfaser-Wellenleiter zu einem bidirektionalen Ringnetz miteinander verbunden sind, **dadurch gekennzeichne**t, daß jedem Glasfaser-Wellenleiter des bidirektionalen Ringnetzes für die Übertragung von Betriebssignalen zwei unterschiedliche Wellenlängen zugeordnet werden, daß im störungsfreien Zustand des Ringnetzes über die erste Wellenlänge der Austausch sämtlicher Betriebssignale zwischen den Netzelementen (NE) erfolgt, daß zeitgleich über die zweite Wellenlänge ein in allen Netzelementen (NE) durchgeschaltetes Ersatzsignal zur Verfügung gestellt wird, über das im störungsfreien Zustand keine Betriebssignale übertragen werden, und daß im Störungsfall die Betriebssignale zwischen den in ihrer Verbindung unterbrochenen Netzelementen (NE) auf den aus der Störung und der Struktur des Ringnetzes resultierenden Ersatzschaltweg umgeschaltet und über das auf der zweiten Wellenlänge permanent zur Verfügung stehende Ersatzsignal übertragen werden, wobei die Übertragung der Betriebssignale über den Ersatzschaltweg unter Wahrung der vollen Übertragungsleistung des gesamten Ringnetzes erfolgt.

2. Anordnung zur optimalen Nutzung der Übertragungskapazität in synchronen bidirektionalen Ringnetzen wobei die Netzelemente (NE) mittels Glasfaser-Wellenleiter zu einem bidirektionalen Ringnetz miteinander verbunden sind und wobei jedem Netzelement (NE) des Ringnetzes zur Übertragung der Betriebssignale, für jeden Glasfaser-Wellenleiter, sowohl in Empfangs- als auch in Senderichtung, die Funktionsgruppen (SPI; RST; MST und MSP) zugeordnet sind, **dadurch gekennzeichnet**, daß jeder Glasfaser-Wellenleiter des Ringnetzes am Eingang jedes Netzelements (NE) mit einem optischen Demultiplexer und am Ausgang jedes Netzelements (NE) mit einem optischen Multiplexer verbunden ist, daß zwischen optischen Multiplexer und optischem Demultiplexer, parallel zu den für die Übertragung der Betriebssignale benötigten Funktionsgruppen, sowohl in Empfangs- als auch in Senderichtung, zusätzlich die Funktionsgruppen (SPI; RST und MST) für die Bereitstellung eines Ersatzsignals in einem vom Betriebssignal unterschiedlichen Wellenlängenbereich angeordnet sind, daß die Funktionsgruppe (MST) für die Übertragung des Ersatzsignals parallel an einem zweiten Eingang der Funktionsgruppe (MSP) angeordnet ist, wobei die Funktionsgruppe (MSP) zusätzlich mit einer Umschaltefunktion ausgestattet ist, die bewirkt, daß bei Ausfall der Verbindung zwischen zwei Netzelementen (NE), das von der Störung betroffene Betriebssignal in beiden gestörten Netzelementen (NE) auf die optische Wellenlänge des Ersatzsignals und über eine entsprechende Brückenschaltung auf das Ersatzsignal des nicht gestörten Glasfaser-Wellenleiters der Gegenrichtung und damit auf den Ersatzschaltweg, der in den nicht gestörten Netzelementen (NE) durchgeschaltet ist, umgeschaltet wird.

3. Anordnung nach Anspruch 2, dadurch gekennzeichnet, daß auf jedem Glasfaser-Wellenleiter des Ringnetzes dem Betriebssignal eine optische Wellenlänge von 1310 nm und dem Ersatzsignal eine optische Wellenlänge von 1550 nm zugeordnet sind.
